# EUROPEAN PATENT SPECIFICATION

(11) **EP 2 642 215 B1**
(45) Date of publication and mention of the grant of the patent: **25.09.2019**
(21) Application number: 13160033.0
(22) Date of filing: 19.03.2013
(51) Int. Cl.: F24F 13/24, F24F 7/06, F24F 12/00

(54) **Ventilation system with an acoustic damper**
Ein Belüftungssystem mit einem Akustikdämpfer
Un système de ventilation avec atténuateur acoustique

(30) Priority: 19.03.2012 GB 201204795
(43) Date of publication of application: 25.09.2013
(73) Proprietor: NuAire Limited, Caerphilly CF83 1NA (GB)
(72) Inventor: Biggs, Colin, Caerphilly, Mid Glamorgan CF83 1XH (GB)
(74) Representative: Jones, David Alan

(56) References cited:
- EP-A1- 2 626 644
- WO-A1-03/073016
- WO-A1-2004/013545
- DE-C1- 10 041 013
- GB-A- 1 554 915
- US-A- 4 236 597
- US-A- 4 582 164
- US-A1- 2008 065 245
- US-A1- 2010 321 873

## Description

The present invention relates to a ventilation system and in particular a ventilation system including a Mechanical Ventilation and Heat Recovery unit and an acoustic attenuator.

A popular form of ventilation equipment, particularly for residential applications, is the Mechanical Ventilation and Heat Recovery unit (MVHR). This type of unit typically includes two fans and a heat recovery device. The components are typically arranged such that fresh air from outside and vitiated air from "wet" rooms within the property is ducted into the unit, and heat is beneficially transferred between the airstreams. The resulting warmed fresh air is ducted from the unit to habitable rooms in the property, and the now cooled vitiated air is ducted to outside.

There are thus four ductwork connections to the unit, and in the commonly encountered wall mounted configuration, these connections are grouped together on the upper surface of the unit. The ductwork connections are required to connect the MVHR unit to the ventilation ductwork which fluidly connects unit to the rooms in question and the external atmosphere. However, noise generated by the fans within the unit is efficiently transferred into the ducts and is subsequently emitted from the walls of the ducts into the space in which the unit is housed. This results in acoustic emissions into habitable rooms which cause nuisance to the occupants of the property.

It is known to provide acoustic attenuation means to attenuate the duct-borne noise to a level that is acceptable. This attenuation may be achieved by the use of readily available individual attenuators, which comprise individual duct connection pipes which are surrounded by an acoustic attenuating material and a further duct wall. However, such attenuators are significantly more bulky than conventional duct connectors, which causes difficulty in installation as each of the multiplicity of duct connections must be sealed to a high standard. Such installations are also unsightly. In addition, the acoustic performance of such an assembled system is inefficient, as it has been observed that significant noise breakout occurs from the portions of the duct connectors points immediately proximate the ports of the MVHR units which are not surrounded by acoustic attenuating material.

Further problems are experienced with such duct connectors where the duct connectors are connected to the ventilation duct prior to installation of the MVHR unit. In such instances if the ductwork is terminated in the wrong position for the required unit connections then it may not be possible to connect the unit in required position and the ducting connection must be dismantled and reinstalled.

Patent document US-4582164-A describes an exemplary ventilation system according to the preamble of independent claim 1.

It is therefore desirable to provide an improved acoustic attenuator which addresses the above described problems and/or which offers improvements generally.

According to the present invention there is provided an acoustic attenuator as described in the accompanying claims.

In an embodiment of the invention there is provided a ventilation system comprising a ventilating unit and an acoustic attenuator for reducing acoustic emissions from a ventilating unit having a plurality of ports, the attenuator comprising a housing comprising a plurality of walls defining an enclosure and including a first port assembly comprising a plurality of first ports arranged in a fixed relationship to each other on a first wall of the housing correspond to the position of said ports of the ventilating unit; and a second port assembly comprising a plurality of second ports corresponding to the plurality of first ports and arranged in a fixed relationship to each other on a second wall of the housing, the second port assembly being configured for connection to a ventilation duct element. The ventilation ducting element may be any further fluid conduit, including a ducting connector or any fluid channel section to which the housing is fluidly connected. A plurality of fluid conduits are provided which fluidly connect each of the first ports to each of the corresponding second ports. A sound attenuating material surrounds the conduits. The conduits are configured to permit sound waves from within the conduits to travel into the sound attenuating material and the conduits are fluidly isolated from each other to prevent air from passing from any one of the conduits into any one of the other conduits through the sound attenuating material. Preferably the housing comprises an internal partition structure configured to fluidly isolate the conduits.

Providing a housing which contains the conduits in a fixed positional arrangement to each other makes installation of the conduits far simpler by requiring only a single stage installation rather than separate installation of multiple independent conduits. Installation is further simplified as the ports of the conduits are fixed in position relative to each other thereby ensuring precise alignment with the corresponding ports of the ventilation unit and the ducting. The attenuator of the present invention also improves acoustic attention by containing the conduits within a single common enclosure, thereby reducing the external surface area through which acoustic waves can be emitted. In ducting arrangements of the prior art each conduit comprises inner and outer pipe structures separated by an attenuating material. As such, acoustic emissions directed radially outwards from the inner pipe structure are emitted about the entire circumference of the outer pipe at equal signal strengths. In contrast, in the present invention a large proportion of the acoustic waves from the conduits are directed internally into the housing and attenuated by a significantly greater volume of attenuating material, with the outer surface area of a single housing greatly reducing the outer surface area, thereby significantly reducing acoustic emissions from the unit.

A plurality of channels is preferably formed in the sound attenuating material, which define the conduits. Prior art ducts comprise an inner and outer pipe, with perforations provided in the inner pipe to allow sound to travel into the sound attenuating material. In contrast, in the present invention the ducting channel conduits are formed directly by the acoustic material, with the acoustic material having channels formed therethrough defining the conduits. This obviates the requirement for a separate thereby reducing parts, materials and assembly time. In addition, the sound waves within the channel travel directly into the attenuating material, rather than via perforations in an intermediate pipe, thereby dramatically improving sound absorption, and avoiding the residual resonation which results in the prior art from acoustic reflections of the body of pipe wall surrounding the perforations.

The first and second port assemblies may each comprise a panel member within which apertures are formed defining the ports, and the panel member of the first port assembly comprises a sealing surface configured to seal against a corresponding sealing surface of a ventilation unit to seal and enclose the first ports. This further improves acoustic attenuation by avoiding any airspace between the ventilating unit and the housing through which sounds waves may be emitted. In arrangements of the prior art a section of un-attenuated ducting typically extends between the ventilating unit and the start of any sound insulating section.

The panel member of the second port assembly may comprise a sealing surface configured to seal against a corresponding sealing surface of a ventilation duct element to seal and enclose the second ports. Similarly to the first sealing surface this prevents and air gap between the housing and any ducting section to which it connects, thereby reducing emissions.

Each of the second ports comprises an aperture formed in the housing and a spigot section surrounding the aperture and extending outwardly from the panel member from the sealing surface of the second port assembly to define a port conduit and located such that the sealing surface surrounds the spigot to seal the periphery of the spigot when the sealing surface is sealed to the corresponding sealing surface of the ventilation duct element to attenuate acoustic emissions from the spigot between the spigot and the duct element. As such, the spigot extends directly into the duct element and no un-attenuated part of the spigot is externally exposed, and the spigot is sealed from the external atmosphere, thereby reducing emissions.

Each of the first ports may comprise an aperture formed in the sealing surface of the first port assembly configured to receive a port spigot of a corresponding port of the ventilation unit such that the spigot is substantially contained within the housing and surrounded by the sound attenuating material, the aperture being located such that the sealing surface surrounds the aperture to seal the periphery of the aperture when the sealing surface is sealed to the corresponding sealing surface of the ventilating unit to attenuate acoustic emissions from the spigot between the ventilating unit and the housing. The spigot is a tubular walled section defining a fluid channel and providing a structural extension of the port.

The acoustic attenuator may include a ventilation duct connector comprising a housing having a plurality of third ports corresponding to the plurality of second ports and arranged in a fixed relationship to each other on a second wall of the housing. The housing is configured for fluid connection to a ventilation duct and comprises a plurality of fluid pathways connected to the plurality of third ports arranged to define conduits between the third ports and the ventilation duct. The ventilator duct connector is an intermediate component for connecting the attenuator housing to the ventilation ducting system. The advantage of the connector is that it can be installed in location prior to the attenuator housing and defines fixed port connection that align with the second ports of the housing which in turn align with the first ports of the

The ventilation duct connector may comprise a third sealing surface arranged to seal against the sealing surface of the second port assembly.

The acoustic attenuator may comprise a plurality of sound attenuating material components corresponding to the plurality of ports. The sound attenuation properties of each component is individually selected depending on the attenuation requirements of the corresponding ports.

The present invention will now be described by way of example only with reference to the following illustrative figures in which:
Figure 1 shows an MVHR unit;
Figure 2 shows an attenuator according to an embodiment of the invention in connection with a MVHR; and
Figure 3 shows an attenuator in combination with a duct connector according to an embodiment of the invention.

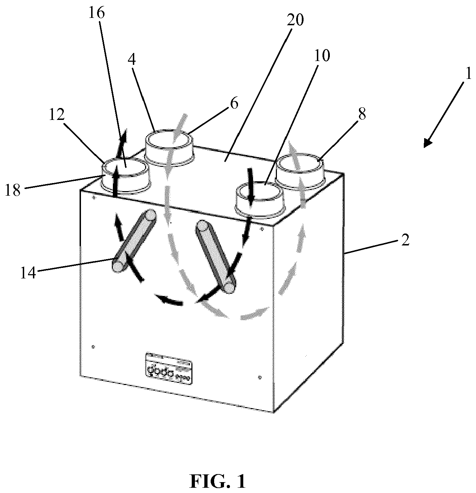

Referring to Figure 1, a Mechanical Ventilation with Heat Recovery unit (MVHR) 1 comprises a housing 2 having a plurality of ports 4. The ports 4 comprise a first inlet 6 connected to an external fresh air supply, an internal outlet 8 for supplying fresh air to habitable rooms of a building, a second inlet 10 for receiving air from within the same habitable rooms and a second outlet 12 for venting vitiated air from "wet" rooms to the external atmosphere. Heat from the externally vented air is removed by a heat exchanger 14 and transferred to the fresh inlet air. Each of the ports 4 comprises an aperture 16 formed in the housing 2 and a projecting pipe section or spigot 18 projects from the upper surface 20 of the housing 2 and surround the periphery of the apertures 16. The spigots 18 are an extension of the ports 4 and define connection points to which further conduits may be connected. The MVHR unit 1 further includes two fans (not shown) form driving air flow between the inlets (6,10) and their respective outlets (8,12).

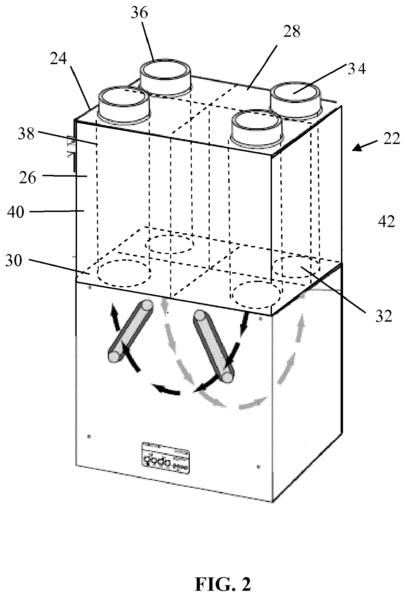

An acoustic attenuator 22 is provided, as shown in Figure 2, to dampen acoustic emissions from the MVHR unit 1. The attenuator 22 comprises a housing 24 including a plurality of side walls 26 and upper 28 and lower 30 walls defining an enclosure. The walls are formed of an substantially impermeable material selected to prevent airflow through the walls. A plurality of apertures 32 defining a first set of ports are formed in the lower wall 30 which are configured to receive the spigots 18 of the MVHR. The position of the apertures 32 in the lower wall 30 is foxed to correspond to the position of the spigots 18.

A plurality of further apertures 34 defining a second set of ports are formed in the upper wall 28 which correspond to and are aligned with the apertures 32. Each of the ports 34 comprises a projecting pipe section or spigot 36 projects from the upper wall 28 which surround the periphery of the apertures 34. The spigots 36 are an extension of the ports 34 and define connection points for connection to an onwards ducting arrangement.

A plurality of channels 38 are provided within the housing 24 which define fluid conduit interconnecting the first ports 32 and the second ports 34. An acoustic damper 40 comprising a body of acoustic attenuating material is provided within the housing 24 to provide an acoustically absorbing barrier between the channels 38 and the walls of the housing 24.

The acoustically attenuating material 40 may be a closed cell acoustic foam or any suitable acoustic damping material. Preferably the channels 38 are formed in the damper 40 with the acoustic attenuating material being formed to defining channels having inner walls defining the conduits 28. The conduits 28 fluidly interconnect the respectively aligned first and second ports 32 and 34.

The spigots 18 of the MVHR are received within the ports 32 with the lower wall 30 sitting directly on the upper wall 20 of the housing 24. Each of these two surfaces defines a sealing surface with the two surfaces being sealed to each other to prevent acoustic emission from the spigots 18 between the housings 2 and 24. As the spigots 18 are substantially entirely received within the housing 24 such that any acoustic emissions from the spigots 18 is attenuated by the damper 40.

Fluid flow through the conduits 28 is in direct fluid contact with damper 40 which defines the conduits 28 with no intermediate member such as a pipe in between. Therefore, any noise from the MVHR travelling into the conduits 28 is absorbed directly into the damper 40.

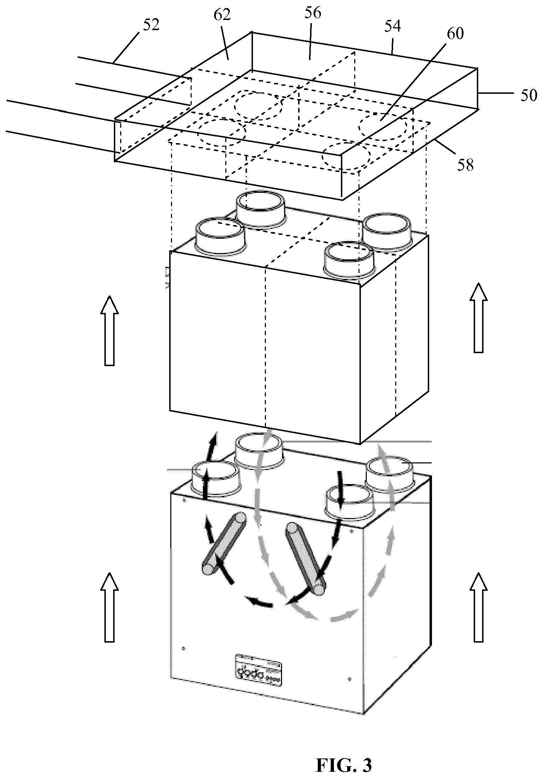

In the arrangement shown in Figure 3 a duct connector 50 is provided to connect the attenuator 22 to a ventilator service duct 52. The connector 50 comprises an enclosure formed from a plurality of side walls 54, and upper wall 56 and a lower wall 58. A plurality of ports 60 are formed in the lower wall 58 which correspond in location to the second ports 34 of the attenuator 22. An internal partition 62 fluidly segregates the ports 60 from each other and defines a corresponding plurality of chambers within the enclosure 50. Each of the chambers connects to a separate duct 52, preferably through apertures formed in the side wall 54. The chambers of the duct connector 50 link the ports 34 of the attenuator with the ducts 52. The connector 50 is sized to have a footprint, as defined by the cross section of the lower wall 58, greater than the footprint of the attenuator and MVHR. This ensures that if the connector 50 is installed on site prior to the other two components, with the connector being installed in a space the other two components must by virtue of them being smaller in footprint fit within the same space at least laterally. In addition, as the ports 60 are fixed in position and correspond to the position of the ports 34 then the attenuator will always align with and connect to the ports 60.

Partition walls 42 within the housing 24 separate and fluidly isolate the conduits 28 to prevent air flow between the conduits 28. This prevents crOss flow and for example prevents wet air extracted from the wet rooms being drawn into and contaminating the fresh inlet air by cross flow through the damper 40. The fluid isolation means 42 is shown in Figure 2 as panels but may be any means for preventing the fluid cross flow.

The present invention addresses the problems experienced with the prior art by combining the four attenuators into a single assembly that is designed to connect directly to the MVHR unit with an effective seal and to significantly reduce inline noise transmission and noise breakout. The attenuator assembly may also be sealed to the distribution ductwork that typically runs above the ceiling of the property. The present invention provides a ductwork connection chamber having four internal sections. This chamber ultimately becomes an integral part of the attenuator assembly, but may be supplied to site separately at an earlier stage in the installation process.

The chamber allows the distribution ductwork to be terminated above the intended location of the attenuator and MVHR unit, and ensures that the final connections will be in the correct position.

The attenuator assembly consists of a sealed enclosure which is internally divided into four chambers which are isolated from each other by sealing. Each chamber aligns with the relevant connection spigot of the MVHR unit, and shall contain sufficient sound absorbing material to control the ducted noise emissions to an appropriate level. The material of the enclosure shall be selected to provide an appropriate level of acoustic transmission loss to limit noise breakout levels.

The attenuator assembly incorporates a means of effectively sealing both to the MVHR unit at its lower face, and to the ductwork connection chamber at its upper face.

The ductwork connection chamber shall be constructed as a separate component with four internal sections, and shall include ductwork connection points appropriate for the type of ductwork specified for the property. The dimensions of the chamber shall ensure that when pre-fitted in the unit installation location, the subsequent installation of the attenuator assembly and MVHR unit may be correctly carried out.

## Claims

1. A ventilation system comprising a ventilating unit (1) and an acoustic attenuator (22) for reducing acoustic emissions from the ventilation unit, the ventilating unit (1) comprising a housing (2) and a plurality of ports (4), with each port (4) comprising an aperture (16) and a spigot (18) surrounding and extending outwardly from the aperture (16), and the attenuator (22) comprising:
an attenuator housing (24) having a plurality of first ports (32) configured to receive the spigots (18) of the ventilating unit (1) and a plurality of second ports (34);
an acoustic attenuating material (40) provided within the attenuator housing (24) having a plurality of channels (28) formed therein defining fluid conduits (38) interconnecting the first ports (32) and second ports (34) with the acoustic attenuating material (40) being in direct fluid communication with the fluid flow through the conduits (38) such that sound waves present within the fluid flow are directly absorbed by the sound attenuating material (40); and
the attenuator (22) further comprises barrier means (42) arranged to fluidly isolate the conduits (38) from each other to prevent air from any one of the conduits (38) from passing into any one of the other conduits (38) through the sound attenuating material (40)
**characterised in that**:
the plurality of first ports (32) of the attenuator (22) and the spigots (18) of the ventilating unit are configured and arranged such when the ventilating unit and the attenuator are connected the spigots (18) of the ventilating unit (1) are entirely received within the housing (24) of the attenuator (22) such that the acoustic emissions from the spigots (18) are attenuated by the acoustic attenuating material (40) of the attenuator (22).

2. A ventilation system according to claim 1 wherein the attenuator housing (24) comprises:
a plurality of walls defining an enclosure;
a first port (32) assembly comprising the plurality of first ports and arranged in a fixed relationship to each other in a first wall of the attenuator housing (24);
a second port (34) assembly comprising the plurality of second ports corresponding to the plurality of first ports (32) and arranged in a fixed relationship to each other on a second wall of the attenuator housing (24) spaced from the first port assembly (32); and
the plurality of channels fluidly connect each of the first ports (32) to a corresponding second port (34).

3. A ventilation system according to claim 2 wherein the barrier means (42) comprises an internal partition structure located within the sound attenuating material (40).

4. A ventilation system according to claim 2 or 3 wherein the first (32) and second port (34) assemblies each comprise a panel member within which apertures are formed defining the ports, and the panel member of the first port (32) assembly comprises an outer sealing surface for sealing the first port assembly to a corresponding sealing surface of a ventilation unit to seal and enclose the first ports.

5. A ventilation system according to claim 4 wherein the panel member of the second port (34) assembly comprises a sealing surface configured to seal against a corresponding sealing surface of a ventilation duct element to seal and enclose the second ports.

6. A ventilation system according to claim 5 wherein each of the second ports (34) comprises an aperture formed in a wall of the attenuator housing (24) and a spigot section (36) surrounding the aperture and extending outwardly from attenuator housing (24) with the area of the housing wall surrounding the spigot (36) defining a sealing surface to seal the periphery of the spigot (36) when the sealing surface is sealed to a corresponding sealing surface of the ventilation duct element to attenuate acoustic emissions from the spigot (36) between the spigot (36) and the duct element.

7. A ventilation system according to claim 6 further including a ventilation duct connector (50) comprising a housing having a plurality of third ports (60) corresponding to the plurality of second ports and arranged in a corresponding fixed relationship to each other, a plurality of chambers defined within the connector housing corresponding to each of the third ports (60), a plurality of fourth ports corresponding to each chamber for connecting each chamber to a corresponding ventilation duct section.

8. A ventilation system according to claim 7 wherein the ventilation duct connector (50) comprises a panel member (58) surrounding the third ports defining a sealing surface arranged to seal against the sealing surface of the second port assembly.

## Patentansprüche

1. Belüftungssystem, das eine Belüftungseinheit (1) und einen Akustikdämpfer (22) zum Reduzieren akustischer Emissionen von der Belüftungseinheit umfasst, wobei die Belüftungseinheit (1) ein Gehäuse (2) und mehrere Anschlüsse (4) umfasst, wobei jeder Anschluss (4) eine Öffnung (16) und einen Zapfen (18), der die Öffnung (16) umgibt und sich davon nach außen erstreckt, umfasst, und wobei der Dämpfer (22) Folgendes umfasst:
ein Dämpfergehäuse (24), das mehrere erste Anschlüsse (32), die dazu ausgelegt sind, die Zapfen (18) der Belüftungseinheit (1) aufzunehmen, und mehrere zweite Anschlüsse (34) aufweist;
ein akustikdämpfendes Material (40), das im Dämpfergehäuse (24) vorgesehen ist und mehrere darin ausgebildete Kanäle (28) aufweist, die Fluidleitungen (38) definieren, die die ersten Anschlüsse (32) mit den zweiten Anschlüssen (34) verbinden, wobei das akustikdämpfende Material (40) in direkter Fluidverbindung mit dem Fluidstrom durch die Leitungen (38) steht, sodass im Fluidstrom vorhandene Schallwellen vom schalldämpfenden Material (40) direkt absorbiert werden; und
wobei der Dämpfer (22) ferner eine Sperreinrichtung (42) umfasst, die angeordnet ist, um die Leitungen (38) fluidisch voneinander zu isolieren, um zu verhindern, dass Luft durch das schalldämpfende Material (40) aus einer der Leitungen (38) in eine der anderen Leitungen (38) gelangt,
**dadurch gekennzeichnet, dass**:
die mehreren ersten Anschlüsse (32) des Dämpfers (22) und die Zapfen (18) der Belüftungseinheit so ausgelegt und angeordnet sind, dass, wenn die Belüftungseinheit mit dem Dämpfer verbunden ist, die Zapfen (18) der Belüftungseinheit (1) vollständig im Gehäuse (24) des Dämpfers (22) aufgenommen werden, sodass die akustischen Emissionen aus den Zapfen (18) vom akustikdämpfenden Material (40) des Dämpfers (22) gedämpft werden.

2. Belüftungssystem nach Anspruch 1, wobei das Dämpfergehäuse (24) Folgendes umfasst:
mehrere Wände, die eine Umschließung definieren;
eine Anordnung der ersten Anschlüsse (32), die die mehreren ersten Anschlüsse umfasst und in einer festen Beziehung zueinander in einer ersten Wand des Dämpfergehäuses (24) angeordnet sind;
eine Anordnung der zweiten Anschlüsse (34), die die mehreren zweiten Anschlüsse umfasst, die den mehreren ersten Anschlüssen (32) zugeordnet sind und in einer festen Beziehung zueinander an einer zweiten Wand des Dämpfergehäuses (24) von der Anordnung der ersten Anschlüsse (32) beabstandet angeordnet ist; und
wobei die mehreren Kanäle jeden der ersten Anschlüsse (32) mit einem zugeordneten zweiten Anschluss (34) fluidisch verbinden.

3. Belüftungssystem nach Anspruch 2, wobei die Sperreinrichtung (42) eine innere Trennwandstruktur umfasst, die sich innerhalb des schalldämpfenden Materials (40) befindet.

4. Belüftungssystem nach Anspruch 2 oder 3, wobei die Anordnung der ersten (32) und zweiten Anschlüsse (34) jeweils ein Plattenelement umfasst, in dem Öffnungen ausgebildet sind, die die Anschlüsse definieren, und wobei das Plattenelement der Anordnung der ersten Anschlüsse (32) eine äußere Dichtungsfläche umfasst, um die Anordnung der ersten Anschlüsse an einer zugeordneten Dichtungsfläche einer Belüftungseinheit abzudichten, um die ersten Anschlüsse abzudichten und zu umschließen.

5. Belüftungssystem nach Anspruch 4, wobei das Plattenelement der Anordnung der zweiten Anschlüsse (34) eine Dichtungsfläche umfasst, die dazu ausgelegt ist, gegen eine zugeordnete Dichtungsfläche eines Belüftungsschachtelements abzudichten, um die zweiten Anschlüsse abzudichten und zu umschließen.

6. Belüftungssystem nach Anspruch 5, wobei jeder der zweiten Anschlüsse (34) eine Öffnung, die in einer Wand des Dämpfergehäuses (24) ausgebildet ist, und einen Zapfenabschnitt (36), der die Öffnung umgibt und sich vom Dämpfergehäuse (24) nach außen erstreckt, umfasst, wobei die Fläche der den Zapfen (36) umgebenden Gehäusewand eine Dichtungsfläche definiert, um den Umfang des Zapfens (36) abzudichten, wenn die Dichtungsfläche an einer zugehörigen Dichtungsfläche des Belüftungsschachtelements abgedichtet ist, um akustische Emissionen aus dem Zapfen (36) zwischen dem Zapfen (36) und dem Schachtelement zu dämpfen.

7. Belüftungssystem nach Anspruch 6, ferner ein Belüftungsschachtverbindungsstück (50) umfassend, das mehrere dritte Anschlüsse (60) aufweist, die den mehreren zweiten Anschlüssen zugeordnet sind und in einer entsprechenden festen Beziehung zueinander angeordnet sind, wobei mehrere Kammern innerhalb des Verbindungsstückgehäuses definiert sind, die jedem der dritten Anschlüsse (60) zugeordnet sind, wobei mehrere vierte Anschlüsse jeder Kammer zugeordnet sind, um jede Kammer mit einem zugeordneten Belüftungsschachtabschnitt zu verbinden.

8. Belüftungssystem nach Anspruch 7, wobei das Belüftungsschachtverbindungsstück (50) ein Plattenelement (58) umfasst, das die dritten Anschlüsse umgibt und eine Dichtungsfläche definiert, die dazu angeordnet ist, gegen die Dichtungsfläche der Anordnung der zweiten Anschlüsse abzudichten.

## Revendications

1. Système de ventilation comprenant une unité de ventilation (1) et un atténuateur acoustique (22) pour réduire les émissions acoustiques venant de l'unité de ventilation, l'unité de ventilation (1) comprenant un boîtier (2) et une pluralité d'orifices (4), chaque orifice (4) comportant une ouverture (16) et une partie faisant saillie (18) entourant l'ouverture (16) et s'étendant vers l'extérieur depuis celle-ci, et l'atténuateur (22) comprenant :
un boîtier d'atténuateur (24) ayant une pluralité de premiers orifices (32) configuré de façon à recevoir les parties faisant saillie (18) de l'unité de ventilation (1) et une pluralité de deuxièmes orifices (34),
un matériau d'atténuation acoustique (40) prévu à l'intérieur du boîtier de l'atténuateur (24) ayant une pluralité de canaux (28) formés à l'intérieur définissant des conduits de fluide (38) interconnectant les premiers orifices (32) et les deuxièmes orifices (34) avec le matériau d'atténuation acoustique (40) étant en communication fluidique directe avec l'écoulement de fluide à travers les conduits (38) de manière à ce que les ondes sonores présentes à l'intérieur de l'écoulement de fluide soient absorbées directement par le matériau d'atténuation sonore (40) ; et
cet atténuateur (22) comprenant en outre un moyen barrière (42) agencé de façon à isoler fluidiquement les conduits les uns des autres afin d'empêcher l'air venant de n'importe lequel des conduits (38) de passer dans n'importe quel des autres conduits (38) à travers le matériau d'atténuation sonore (40),
**caractérisé en ce que** :
la pluralité de premiers orifices (32) de l'atténuateur (22) et les parties faisant saillie (18) de l'unité de ventilation sont configurées et agencées de manière à ce que, lorsque l'unité de ventilation et l'atténuateur sont assemblés, les parties faisant saillie (18) de l'unité de ventilation (1) soient reçues entièrement à l'intérieur du boîtier (24) de l'atténuateur (22) de manière à ce que les émissions acoustiques venant des parties faisant saillie (18) soient atténuées par le matériau d'atténuation acoustique (40) de l'atténuateur (22).

2. Système de ventilation selon la revendication 1, dans lequel le boîtier de l'atténuateur (24) comprend :
une pluralité de parois définissant une enceinte ;
un premier ensemble d'orifices (32) comprenant la pluralité de premiers orifices et disposé de manière fixe les uns par rapport aux autres dans une première paroi du boîtier de l'atténuateur (24) ;
un deuxième ensemble d'orifices (34) comprenant la pluralité de deuxièmes orifices correspondant à la pluralité de premiers orifices (32) et disposés de manière fixe les uns par rapport aux autres sur une deuxième paroi du boîtier de l'atténuateur (24), écarté de l'ensemble de premiers orifices (32) ; et
la pluralité de canaux reliant fluidiquement chacun des premiers orifices (32) à un deuxième orifice correspondant (34).

3. Système de ventilation selon la revendication 2, dans lequel le moyen barrière (42) consiste en une structure de cloison interne située à l'intérieur du matériau d'atténuation sonore (40).

4. Système de ventilation selon la revendication 2 ou 3, dans lequel le premier (32) et le deuxième (34) ensemble d'orifices comportent un élément panneau à l'intérieur duquel des ouvertures sont formées définissant les orifices, et dans lequel l'élément panneau du premier ensemble d'orifices (32) comporte une surface d'étanchéité extérieure pour rendre étanche le premier ensemble d'orifices relativement à une surface d'étanchéité correspondante d'une unité de ventilation afin de rendre étanches les premier orifices et de les renfermer.

5. Système de ventilation selon la revendication 4, dans lequel l'élément panneau du deuxième ensemble d'orifices (34) comporte une surface d'étanchéité configurée de façon à s'adapter de façon étanche contre une surface d'étanchéité correspondante d'un élément de conduit de ventilation afin de rendre étanches les deuxièmes orifices et de les renfermer.

6. Système de ventilation selon la revendication 5, dans lequel chacun des deuxièmes orifices (34) consiste en une ouverture formée dans une paroi du boîtier de l'atténuateur (24) et en un section faisant saillie (36) entourant l'ouverture et s'étendant vers l'extérieur depuis le boîtier de l'atténuateur (24), la zone de la paroi du boîtier entourant la partie faisant saillie (36) définissant une surface d'étanchéité pour rendre étanche le pourtour de la partie faisant saillie (36) lorsque cette surface d'étanchéité est adaptée de façon étanche sur une surface d'étanchéité correspondante de l'élément du conduit de ventilation pour atténuer les émissions acoustiques venant de la partie faisant saillie (36) entre la partie faisant saillie (36) et l'élément du conduit.

7. Système de ventilation selon la revendication 6, comprenant en outre un raccord de conduit de ventilation (50) comportant un boîtier ayant une pluralité de troisièmes orifices (60) correspondant à la pluralité de deuxièmes orifices et disposés dans un rapport fixe correspondant les uns par rapport aux autres, une pluralité de chambres définies à l'intérieur du boîtier du raccord correspondant à chacun des troisièmes orifices (60), une pluralité de quatrièmes orifices correspondant à chaque chambre pour raccorder chaque chambre à une section de conduit de ventilation correspondante.

8. Système de ventilation selon la revendication 7, dans lequel le raccord du conduit de ventilation (50) comporte un élément panneau (58) entourant les troisièmes orifices définissant une surface d'étanchéité agencée de façon à s'adapter de façon étanche à la surface d'étanchéité du deuxième ensemble d'orifices.
